# EUROPEAN PATENT APPLICATION

(11) **EP 2 100 772 A2**
(43) Date of publication of application: **16.09.2009**
(21) Application number: 09153632.6
(22) Date of filing: 25.02.2009
(51) Int. Cl.: B60R 1/00

(54) **Imaging device and method thereof, as well as image processing device and method thereof**

(30) Priority: 12.03.2008 JP 2008062366
(71) Applicant: Omron Corporation, Kyoto-shi, Kyoto 600-8530 (JP)
(72) Inventor: Iketani, Takashi, Kyoto-shi Kyoto 600-8530 (JP)
(74) Representative: Wilhelms · Kilian & Partner Patentanwälte

(57) **Abstract**

An imaging device includes an optical system (141) for forming one image by refracting light entered from a right side of a vehicle and light entered from a left side of the vehicle to the same direction such that one is on top and the other is on bottom while being installed at a predetermined position of the vehicle.

## Description

### BACKGROUND OF THE INVENTION

### 1. TECHNICAL FIELD

The present invention relates to imaging devices and methods thereof, as well as, image processing devices and methods thereof, in particular to a camera and a method suitably used when checking the situation on a left side or a right side of a vehicle, as well as, an image processing device and method thereof.

### 2. RELATED ART

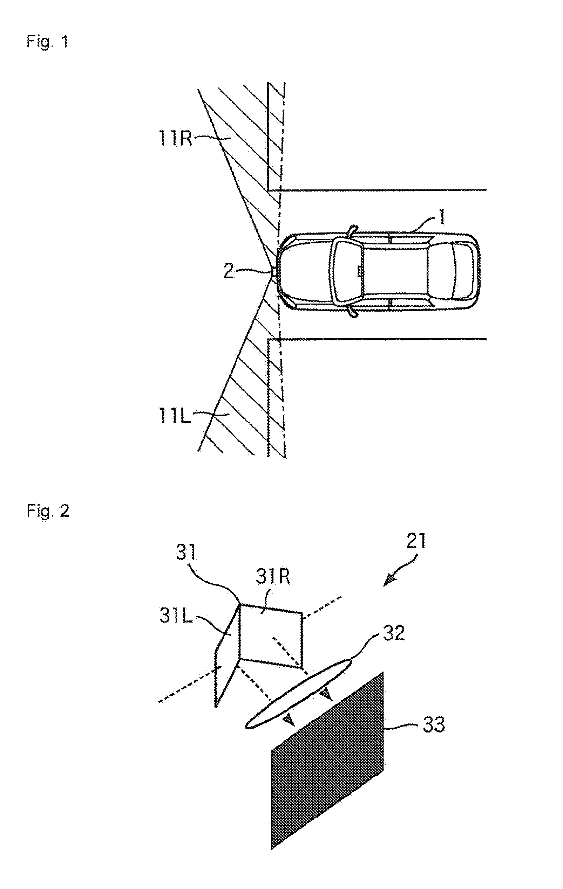

As shown in Fig. 1, a technique allowing a region that becomes the blind corner of the driver when approaching the intersection, for example, to be easily checked by imaging a viewing angle 11R on a right side and a viewing angle 11L on a left side of a vehicle 1 with a camera 2 installed at a front part of the vehicle 1, and displaying the imaged image on a display in the vehicle, and the like is conventionally proposed (see e.g., Japanese Unexamined Patent Publication No. 3573187).

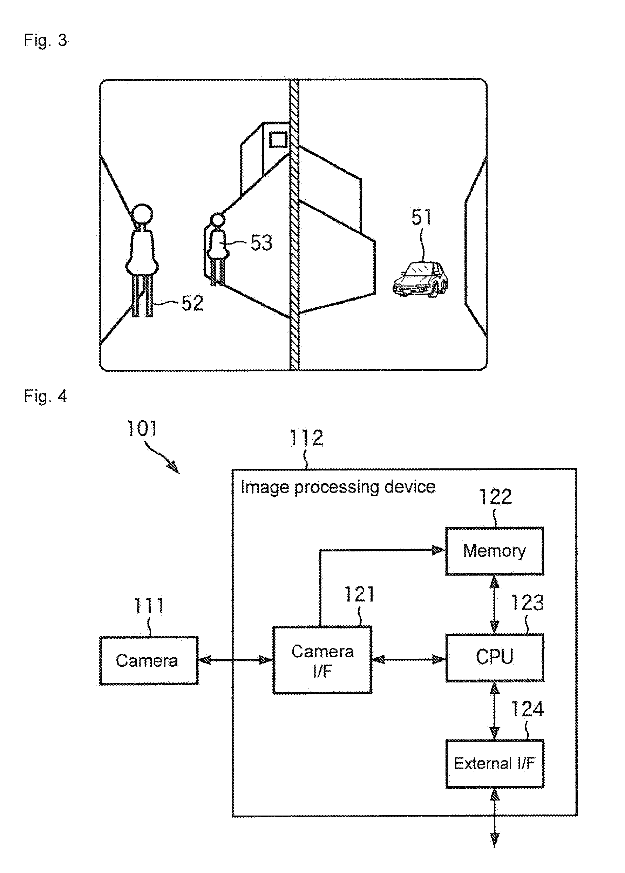

Fig. 2 is a view schematically showing an example of a configuration of an optical system 21 of the camera 2. A prism 31 has the left half of an incident surface (incident surface 31R) facing diagonally rightward when seen from a lens 32 and the right half of an incident surface (incident surface 31L) facing diagonally leftward when seen from the lens 32. Thus, the light entered to the incident surface 31R from the right side of the vehicle 1, and the light entered to the incident surface 31L from the left side of the vehicle 1 are both refracted toward the lens 32 and transmitted through the lens 32, where the image of the light refracted by the incident surface 31R is imaged on the right half of an imaging element 33, and the image of the light refracted by the incident surface 31L is imaged on the left half of the imaging element 33. Thus, an image (hereinafter referred to as side image) in which the image of the viewing angle 11R of the right side of the vehicle 1 is arranged on the right half and the image of the viewing angle 11L of the left side of the vehicle 1 is arranged on the left half can be obtained, as schematically shown in Fig. 3.

Fig. 3 shows an example of the side image where a vehicle 51 exists on the right side of the own vehicle, and a person 52 and a person 53 exist on the left side of the own vehicle.

### SUMMARY

However, in the camera 2, the range for imaging the viewing angle 11R of the right side and the viewing angle 11L of the left side of the vehicle 1 is respectively limited to a region of half of the side image in a horizontal direction. Thus, the range for checking the situation on the left and right sides of the vehicle 1 narrows, and detection cannot be made unless a moving body such as the other vehicles and pedestrians come close to the vehicle 1.

The present invention has been devised to solve the problems described above, and allows the left and right sides of the vehicle to be checked to farther distance with a simple configuration.

In accordance with a first aspect of the present invention, an imaging device of the first aspect of the present invention includes an optical system for forming one image by refracting light entered from a right side of a vehicle and light entered from a left side of the vehicle to the same direction such that the one is on top and the other is on bottom while being installed at a predetermined position of the vehicle.

In the imaging device of the first aspect of the present invention, the light entered from the right side of the vehicle and the light entered from the left side of the vehicle are refracted to the same direction such that one is on top and the other is on bottom to form one image.

Therefore, the left and right sides of the vehicle can be imaged together while being lined one above the other. The situation on the left and right sides of the vehicle can be checked to farther distance with a simple configuration.

The optical system is configured by prism, mirror, lens, imaging element, and the like.

The optical system may be arranged with a refracting means with a first refracting portion for refracting the light entered from the right side of the vehicle to a predetermined direction and a second refracting portion for refracting the light entered from the left side of the vehicle to the predetermined direction, the first refracting portion and the second refracting portion being arranged lined in an up and down direction such that one is on top and the other is on bottom.

The optical system thus may have a simple configuration.

The refracting means may be configured by prism, mirror, and the like.

The optical system may be further arranged with a telescopic lens which the light refracted by the refracting means enter.

Thus, the resolution of the image can be enhanced, and the situation on the left and right sides of the vehicle can be checked to farther distance.

In accordance with the first aspect of the present invention, an imaging method of the first aspect of the present invention includes the step of forming one image by refracting light entered from a right side of a vehicle and light entered from a left side of the vehicle to the same direction such that one is on top and the other is on bottom, and imaging the formed image.

In the imaging method of the first aspect of the present invention, one image is formed on an imaging element, which is installed to be substantially perpendicular to a road surface and such that an imaging surface faces a front direction of the vehicle, by refracting light entered from a right side of a vehicle and light entered from a left side of the vehicle to the same direction such that one is on top and the other is on bottom, and the formed image is imaged.

Therefore, the left and right sides of the vehicle can be imaged together while being lined one above the other. The situation on the left and right sides of the vehicle can be checked to farther distance with a simple configuration.

In accordance with a second aspect of the present invention, an image processing device of the second aspect of the present invention includes an imaging means including an optical system for forming one image by refracting light entered from a right side of a vehicle and light entered from a left side of the vehicle to the same direction such the one is on top and the other is on bottom while being installed at a predetermined position of the vehicle; and an image processing means for processing the image of the image imaged by the imaging means.

In the image processing device of the second aspect of the present invention, the light entered from the right side of the vehicle and the light entered from the left side of the vehicle are refracted to the same direction such that one is on top and the other is on bottom to form one image, and the image of the imaged image is processed.

Therefore, the left and right sides of the vehicle can be imaged together while being lined one above the other, and the imaged image can be processed. Furthermore, the situation on the left and right sides of the vehicle can be checked to farther distance with a simple configuration.

The optical system is configured by prism, mirror, lens, imaging element, and the like; and the image processing means is configured by CPU and the like.

The image processing means can convert the right side image of the vehicle and the left side image of the vehicle lined one above the other in the image so as to line the right side image on the right and the left side image on the left.

The situation on the left and right sides of the vehicle thus can be intuitively grasped.

The image processing means can detect an object on the right side and the left side of the vehicle based on the image.

Thus, an object present at farther distance on the left and right sides of the vehicle can be detected.

In accordance with the second aspect of the present invention, an image processing method of the second aspect of the present invention includes the steps of forming one image on an imaging element, which is installed to be substantially perpendicular to a road surface and such that an imaging surface faces a front direction of the vehicle, by refracting light entered from a right side of a vehicle and light entered from a left side of the vehicle to the same direction such that one is on top and the other is on bottom, and imaging the formed image; and processing the image imaged in the process of the imaging step.

In the image processing method of the second aspect of the present invention, one image is formed on an imaging element, which is installed to be substantially perpendicular to a road surface and such that an imaging surface faces a front direction of the vehicle, by refracting light entered from a right side of a vehicle and light entered from a left side of the vehicle to the same direction such that one is on top and the other is on bottom, the formed image is imaged, and the imaged image is processed.

Therefore, the left and right sides of the vehicle can be imaged together while being lined one above the other, and the imaged image can be processed. Furthermore, the situation on the left and right sides of the vehicle can be checked to farther distance with a simple configuration.

According to the first aspect of the present invention, the left and right sides of the vehicle can be imaged together while being lined one above the other. In particular, according to the first aspect of the present invention, the situation on the left and right sides of the vehicle can be checked to farther distance with a simple configuration.

According to the second aspect of the present invention, the left and right sides of the vehicle can be imaged together while being lined one above the other, and the imaged image can be processed. In particular, according to the second aspect of the present invention, the situation on the left and right sides of the vehicle can be checked to farther distance with a simple configuration.

### BRIEF DESCRIPTION OF THE DRAWINGS

Fig. 1 is a view showing an example of an installing position and an imaging range of a conventional camera;
Fig. 2 is a view showing an example of an optical system of the conventional camera;
Fig. 3 is a view schematically showing an example of a side image imaged by the conventional camera;
Fig. 4 is a block diagram showing one embodiment of an image processing system applied with the present invention;
Fig. 5 is a view schematically showing an example of a configuration of an optical system of a camera applied with the present invention;
Fig. 6 is a view showing an example of an installing position of the camera;
Fig. 7 is a view schematically showing an example of a side image;
Fig. 8 is a block diagram showing an example of a configuration of a function realized by the CPU;
Fig. 9 is a flowchart for describing a side monitoring process executed by the image processing system;
Fig. 10 is a view schematically showing an example of a converted image;
Fig. 11 is a view schematically showing an example of a monitor image;
Fig. 12 is a view schematically showing another example of a monitor image;
Fig. 13 is a view schematically showing another further example of a monitor image;
Fig. 14 is a view schematically showing an example of a side image when a telescopic lens is used;
Fig. 15 is a view schematically showing an example of a monitor image when the telescopic lens is used;
Fig. 16 is a view schematically showing another example of a monitor image when the telescopic lens is used;
Fig. 17 is a view schematically showing another further example of a monitor image when the telescopic lens is used;
Fig. 18 is a view for describing a comparison of performances of a moving body detection process of the conventional invention and the present invention; and
Fig. 19 is a view showing another example of an installing position of the camera.

### DETAILED DESCRIPTION

Hereinafter, preferred embodiments of the present invention will be described with reference to the drawings.

Fig. 4 is a block diagram showing one embodiment of an image processing system applied with the present invention. An image processing system 101 of Fig. 4 images a left side and a right side of an own vehicle, which are the blind corners from the vehicle (also referred to as own vehicle) in which the image processing system 101 is arranged at intersections where left and right views are bad, and displays the imaged image (hereinafter referred to as side image) or processes the side image. The image processing system 101 is configured to include a camera 111 and an image processing device 112.

The camera 111 images the right side and the left side of the own vehicle, and provides the side image obtained as a result of imaging to the image processing device 112.

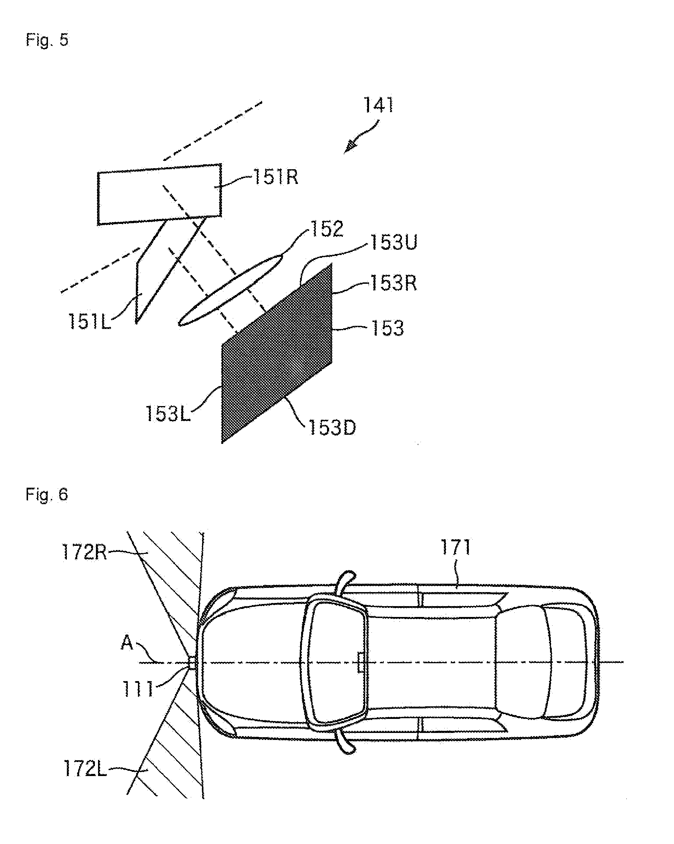

Fig. 5 is a view schematically showing a configuration of an optical system 141 of the camera 111. The optical system 141 of the camera 111 is configured to include prisms 151L, 151R, a lens 152, and an imaging element 153. In Fig. 5, a diagonally upward left is a front direction of the camera 111.

An incident surface of the prism 151R (back surface of the surface of the prism 151R seen in Fig. 5) faces diagonally rightward when seen from the lens 152, and an incident surface of the prism 151L (back surface of the surface of the prism 151L seen in Fig. 5) faces diagonally leftward when seen from the lens 152. The prism 151R and the prism 151L are arranged lined in an up and down direction such that the prism 151R is on the top and the prism 151L is on the bottom, and the respective incident surfaces cross at substantially the middle. Furthermore, a main plane of the lens 152 (plane passing through the main point of the lens 152 and being perpendicular to the optical axis) and an imaging surface of the imaging element 153 are arranged to be substantially parallel when lined in a front and back direction.

The light entered to the incident surface of the prism 151R and the light entered to the incident surface of the prism 151L are refracted toward the lens 152 by the prism 151R and the prism 151L such that the light from the prism 151R is on the top and the light from the prism 151L is on the bottom, thereby forming one image, and the lights are transmitted through the lens 152, and thereafter, imaged at the imaging surface of the imaging element 153. The image formed by the light entered to the prism 151R is then imaged by the upper half of the imaging element 153, and the image formed by the light entered to the prism 151L is imaged by the lower half of the imaging element 153.

Fig. 6 shows an example of an installing position of the camera 111 when the image processing system 101 is arranged in a vehicle 171. The camera 111 is installed on the center axis A in the front and back direction of the vehicle 171 at a front end portion so as to project out from the front end of the vehicle 171. The camera 111 is also installed such that the imaging element 153 is substantially perpendicular to the road surface on a horizontal road surface (side 153U and side 153D in a horizontal direction of the imaging element 153 are substantially parallel, and sides 153L and 153R in a vertical direction are substantially perpendicular with respect to the road surface immediately below the camera 111), and the imaging surface faces the front direction of the vehicle 171. The image of the viewing angle 172R on the right side and the image of the viewing angle 172L on the left side of the vehicle 171 are thereby imaged as one image by the optical system 141 of the camera 111.

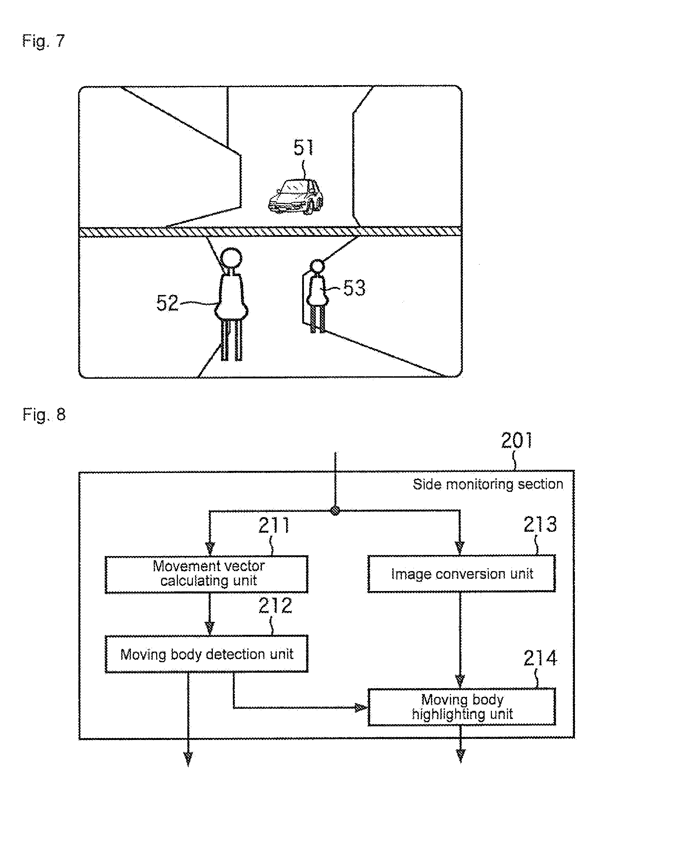

Fig. 7 schematically shows an example of the side image imaged by the camera 111 in the same situation as when the side image of Fig. 3 is imaged by the conventional camera 2. Through the use of the camera 111 including the optical system 141, the image in which the image of the viewing angle on the right side of the vehicle is arranged on an upper side and the image of the viewing angle on the left side of the vehicle is arranged on a lower side can be easily imaged, as shown in Fig. 7. The camera 111 can image a farther range of the left and right sides of the own vehicle compared to the camera 2.

Returning to Fig. 4, the image processing device 112 is configured to include a camera interface (I/F) 121, a memory 122, a CPU (Central Processing Unit) 123, and an external interface (I/F) 124.

The camera I/F 121 acquires the side image imaged by the camera 111 based on control of the CPU 123, and stores the same in the memory 122.

The CPU 123 executes a predetermined control program to control the operation of each unit of the image processing device 112, and performs a predetermined image processing on the side image stored in the memory 122. The CPU 123 also provides information indicating the result of image processing, as necessary, to an electronic control unit (ECU), an engine control unit (ECU), a car navigation system, and the like via the external I/F 124, a CAN (Controller Area Network) (not shown), and the like.

Fig. 8 is a block diagram showing one example of a function realized by the CPU 23. A side monitoring section 201 is realized, for example, when the CPU 123 executes the control program. The side monitoring section 201 is configured to include a movement vector calculating unit 211, a moving body detection unit 212, an image conversion unit 213, and a moving body highlighting unit 214.

The movement vector calculating unit 211 reads out the side image stored in the memory 122, and calculates a movement vector in the side image using a predetermined method. The movement vector calculating unit 211 provides the side image and information indicating the calculated movement vector to the moving body detection unit 212.

The moving body detection unit 212 detects the moving body in the side image based on the movement vector calculated by the movement vector calculating unit 211 using a predetermined method, and provides information indicating the position of the detected moving body in the side image to the moving body highlighting unit 214. The moving body detection unit 212 also provides information indicating the detection result of the moving body (e.g., presence of moving body, a direction in which the moving body is detected, or the like) to other in-vehicle devices via the external I/F 124 and the CAN (not shown).

The image conversion unit 213 reads out the side image stored in the memory 122, and performs conversion of size, arrangement, and the like of the side image. The image conversion unit 213 provides the side image after conversion (hereinafter referred to as converted image) to the moving body highlighting unit 214.

The moving body highlighting unit 214 performs image processing on the converted image to highlight the moving body detected by the moving body detection unit 212. The moving body highlighting unit 214 provides the image after image processing (hereinafter referred to as monitor image) to the display device (e.g., display of the car navigation system, etc.) in the own vehicle via the external I/F 124 and the CAN (not shown), and displays the same.

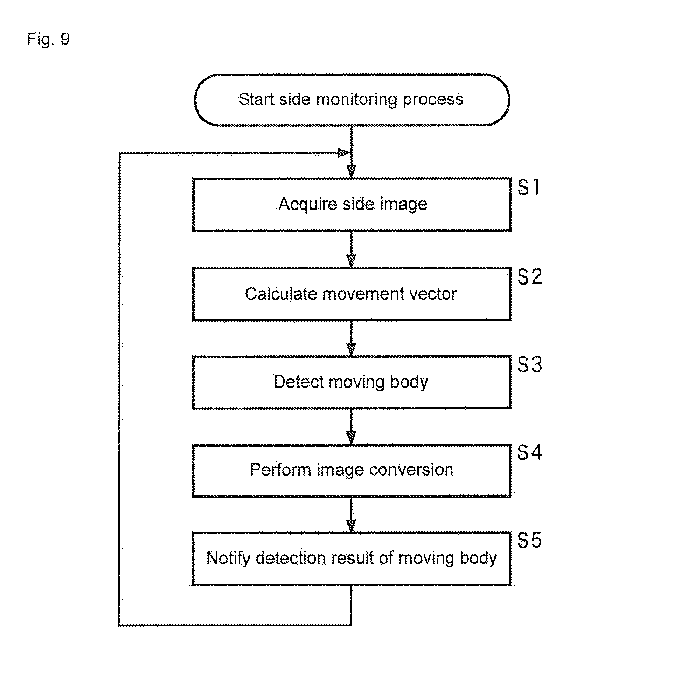

The side monitoring process executed by the image processing system 101 will now be described with reference to the flowchart of Fig. 9. This process starts when the engine of the own vehicle is started, and ends when the engine of the own vehicle is stopped.

In step S1, the image processing system 101 acquires the side image. Specifically, the camera 111 images the right side and the left side of the own vehicle all at once, as described with reference to Fig. 5, and stores the side image obtained as a result of imaging in the memory 122 via the camera I/F 121.

In step S2, the movement vector calculating unit 211 calculates a movement vector based on a predetermined method. For instance, the movement vector calculating unit 211 reads out a side image t at the most recent time t, and a side image t-1 at time t-1 one before the side image t from the memory 122. The movement vector calculating unit 211 extracts features points (e.g., edge, corner, etc.) in the side image t-1, and calculates a movement vector between the side image t-1 and the side image t with respect to the extracted feature points. The movement vector calculating unit 211 provides the side image and the information indicating the calculated movement vector to the moving body detection unit 212.

The method for calculating the movement vector used herein is not limited to a specific method, and a method of calculating the movement vector more accurately, more rapidly, and more easily is desirably applied.

In step S3, the moving body detection unit 212 detects the moving body based on a predetermined method. For instance, the moving body detection unit 212 acquires information indicating the angular speed in a turning direction of the own vehicle from a yaw rate sensor (not shown), and calculates the angle which the camera 111 rotated when the own vehicle rotated in the turning direction between time t-1 and time t based on the acquired angular speed of the own vehicle. The moving body detection unit 212 then calculates a vector (hereinafter referred to as conversion vector) in which a component generated by the rotation in the turning direction of the camera 111 is removed from a component of each movement vector.

The moving body detection unit 212 acquires the information indicating the speed of the own vehicle from a vehicle speed sensor (not shown), and calculates the distance which the camera 111 moved due to the movement of the own vehicle between time t-1 and time t based on the acquired speed of the own vehicle. The moving body detection unit 212 determines whether each conversion vector is a vector generated only by the movement in a distance direction of the camera 111 (hereinafter referred to as background vector), or a vector generated by the movement in the distance direction of the camera 111 and the movement of the subject (hereinafter referred to as moving body vector) based on the position in the side image of each conversion vector and the distance which the own vehicle moved between time t-1 and time t. The moving body detection unit 212 detects the position of the moving body in the side image t based on the vector determined as the moving body vector. The moving body detection unit 212 provides information indicating the position of the detected moving body in the side image to the moving body highlighting unit 214.

The method of detecting the moving body used here is not limited to a specific method, and a method of detecting the moving body more accurately, more rapidly, and more easily is desirably applied.

In step S4, the image conversion unit 213 performs image conversion. Specifically, the image conversion unit 214 reads out the most recent side image t stored in the memory 122. The image conversion unit 213 divides the side image t to the image of the viewing angle of the right side of the own vehicle on the upper side (hereinafter referred to as right side image) and the image of the viewing angle of the left side on the lower side (hereinafter referred to as left side image). The image conversion unit 213 stretches the size (number of pixels) in the vertical direction of the right side image and the left side image to two times by interpolating the pixels, and reduces the size (number of pixels) in the horizontal direction to 1/2 times by synthesizing or decimating the pixels. The image conversion unit 213 generates an image (converted image) in which the right side image after the size is converted is arranged on the right, and the left side image after the size is converted is arranged on the left.

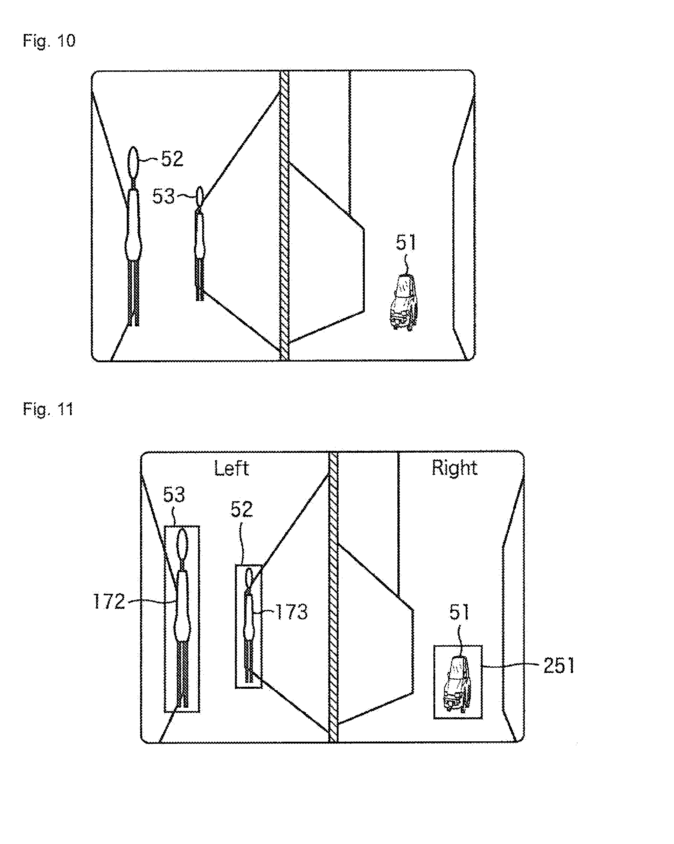

For instance, when the side image of Fig. 7 is image converted, an image where an image in which the vertical direction of the image on the upper side (right side image) of the side image of Fig. 7 is stretched to two times, and the horizontal direction is reduced to 1/2 times is arranged on the right, and the image in which the vertical direction of the image on the lower side (left side image) of the side image of Fig. 7 is stretched to two times and the horizontal direction is reduced to 1/2 times is arranged on the left is generated, as shown in Fig. 10.

The image conversion unit 213 provides the generated converted image to the moving body highlighting unit 214.

In step S5, the moving body detection unit 212 and the moving body highlighting unit 214 notify the detection result of the moving body. Specifically, the moving body detection unit 212 provides information indicating the detection result of the moving body to other in-vehicle devices via the external I/F 124 and the CAN (not shown). The in-vehicle device notified with the detection result of the moving body performs processes corresponding to the detection result. For instance, the in-vehicle device notified with the detection result notifies the approach of the moving body by voice or by body sensory information such as the vibration of a steering wheel, or automatically operates the brake of the own vehicle when approach of the moving body is detected.

The moving body highlighting unit 214 converts the position of the moving body in the side image t detected by the moving body detection unit 212 to the position in the converted image. The moving body highlighting unit 214 performs a display effect of highlighting the detected moving body with respect to the converted image. The moving body highlighting unit 214 executes a process of superimposing a frame 251, a frame 252, and a frame 253 surrounding the vehicle 51, the person 52, and the person 53, which are the moving bodies, on the converted image of Fig. 10, as shown in Fig. 11. The moving body highlighting unit 214 superimposes a character "right" indicating that it is the image of the right side of the own vehicle at the top of the right side of the converted image, and superimposes a character "left" indicating that it is the image of the left side of the own vehicle at the top of the left side of the converted image. The moving body highlighting unit 214 provides the monitor image after the highlighting process to the display device in the own vehicle via the external I/F 124 and the CAN (not shown), and displays the monitor image. Thereafter, the process returns to step S1, and the processes after step S1 are executed.

The viewing angles on the left and the right sides of the own vehicle then can be imaged and displayed to a farther distance from the own vehicle, whereby the passenger can check the situation on the left and right sides of the own vehicle to a farther distance. The moving body at the position more distant from the own vehicle can also be detected. Furthermore, since the detected moving body is displayed in a highlighted manner, the passenger can more rapidly and reliably notice the moving body at the left and the right sides of the own vehicle, which enhances safety. The situation on the left and right sides of the own vehicle can be grasped more intuitively by arranging and displaying the right side image on the right and the left side image on the left as in the monitor image of Fig. 11 compared to displaying the side image of Fig. 7 as is.

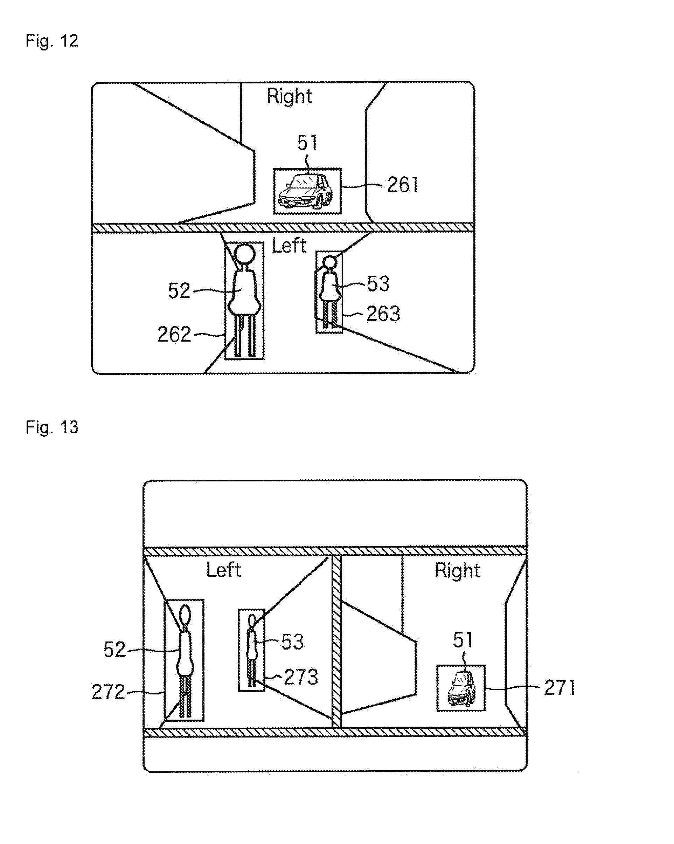

Instead of the monitor image of Fig. 11, a monitor image in which the moving body highlighting process is performed on the side image of Fig. 7 may be displayed, as shown in Fig. 12. In other words, a monitor image in which a frame 261, a frame 262, and a frame 263 surrounding the vehicle 51, the person 52, and the person 53 are superimposed on the side image of Fig. 7, the character "right" is superimposed at the top of the right side image on the upper side, and the character "left" is superimposed at the top of the left side image on the lower side may be displayed. This allows the situation on the left and right sides of the own vehicle to be checked at a size equal to the actual vertical and horizontal dimension ratio.

Instead of the monitor image of Fig. 11, a monitor image in which the stretching in the vertical direction is not performed, as shown in Fig. 13, may be displayed. In other words, a frame 271, a monitor image in which a frame 272, and a frame 273 surrounding the vehicle 51, the person 52, and the person 53 are superimposed on the converted image in which the image having only the horizontal direction of the right side image on the upper side of the side image of Fig. 7 reduced to 1/2 times is arranged on the right and the image having only the horizontal direction of the left side image on the lower side reduced to 1/2 times is arranged on the left, the character "right" is superimposed at the top of the right side image on the right side, and the character "left" is superimposed at the top of the left side image on the left side may be displayed. This allows the situation on the left and right sides of the own vehicle to be grasped more intuitively, and the situation on the left and right sides of the own vehicle to be checked at a size close to the actual vertical and horizontal dimension ratio.

The conversion magnification for enlarging or reducing the right side image and the left side image is not limited to the example described above, and may be set to other values. The conversion magnification of the right side image and the left side image does not necessarily need to be the same, and may be set to different values for the left and the right.

The method for displaying the moving body in a highlighted manner is not limited to the example described above, and may be a method of changing the color of the moving body, flashing the region where the moving body is displayed, and the like.

The characters "left" and "right" may not be displayed on the monitor image.

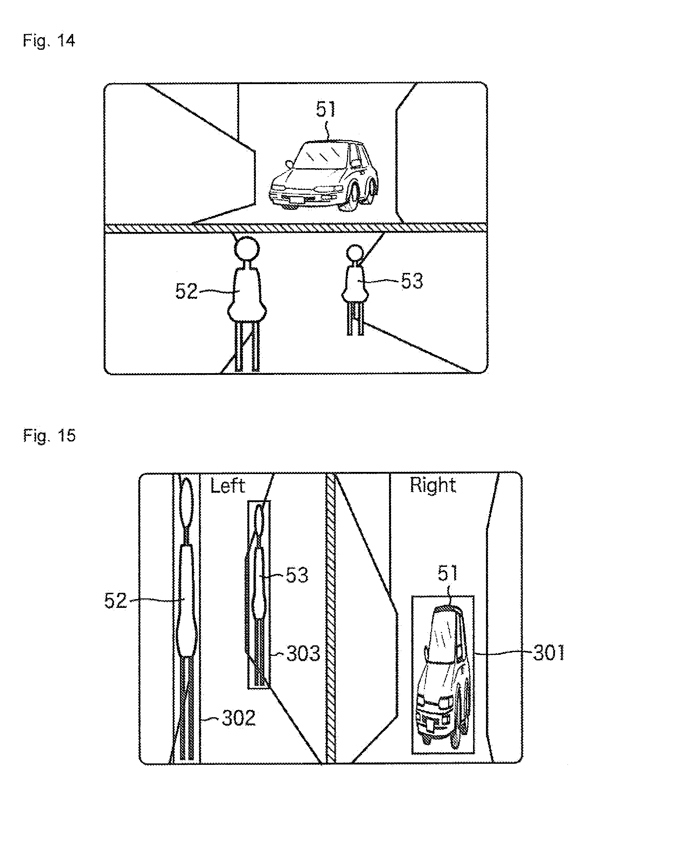

To allow the situation on the left and right sides of the own vehicle to be checked to farther distance in more detail, a telescopic lens may be used for the lens 152 of the optical system 141 of the camera 111. Fig. 14 shows an example of the side image imaged using the telescopic lens having about twice the viewing angle of that of the lens 152 in the same situation as when the side image of Fig. 7 is imaged. In other words, compared to the side image of Fig. 7, the side image of Fig. 14 has the imaging range of about 1/2 in both the up and down direction and the left and right direction and resolution of about two times in both the up and down direction and in the left and right direction. Furthermore, compared to the side image of Fig. 3, the side image of Fig. 14 has the imaging range of about 1/2 in the up and down direction and the same in the left and right direction, and the resolution of about two times in both the up and down direction and in the left and right direction.

The resolution referred to herein is the number of pixels assigned per unit length (e.g., 1 cm) of the subject. For instance, in the side image of Fig. 14, the number of pixels assigned to the vehicle 41 is about two times in the up and down direction and the left and right direction, and the resolution is about four times, that is, about two times vertically × about two times horizontally compared to the side images of Figs. 3 and 7. Therefore, the viewing angle of the left and right sides of the own vehicle can be checked to farther distance in more detail in the side image of Fig. 14, compared to the side images of Figs. 3 and 7.

Fig. 15 is a schematic view showing an example of a monitor image in which the moving body highlighting process similar to the monitor image of Fig. 11 is performed on the side image of Fig. 14. That is, Fig. 15 shows a monitor image in which a frame 301, a frame 302, and a frame 303 surrounding the vehicle 51, the person 52, and the person 53 are superimposed on the converted image in which an image where the vertical direction of the right side image on the upper side of the side image of Fig. 14 is stretched to two times and the horizontal direction is reduced to 1/2 times is arranged on the right and an image where the vertical direction of the left side image on the lower side is stretched to two times and the horizontal direction is reduced to 1/2 times is arranged on the left, the character "right" is superimposed at the top of the right side image on the right side and the character "left" is superimposed at the top of the left side image on the left side.

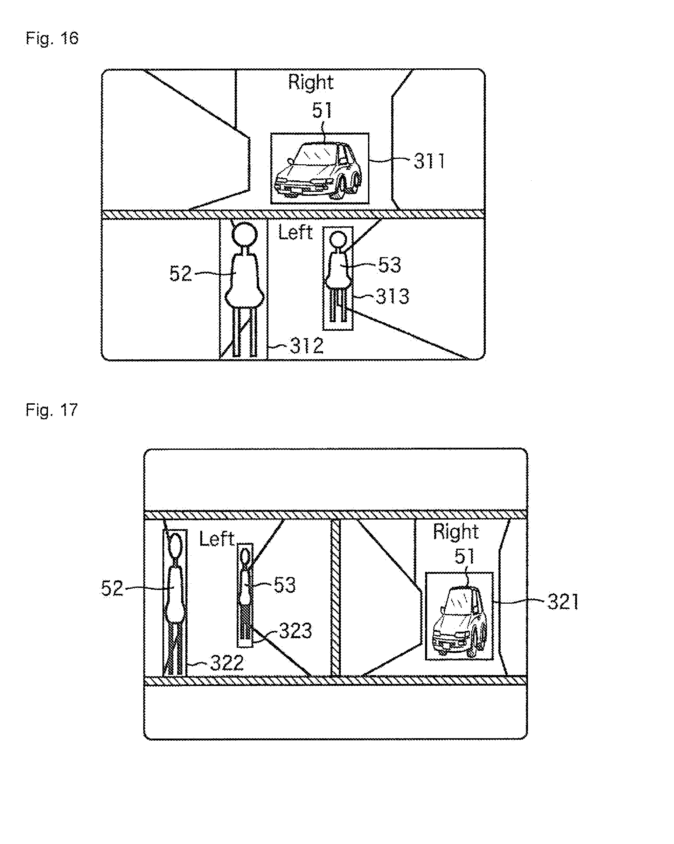

Fig. 16 is a schematic view showing an example of a monitor image in which the moving body highlighting process similar to the monitor image of Fig. 12 is performed on the side image of Fig. 14. In other words, Fig. 16 shows a monitor image in which a frame 311, a frame 312, and a frame 313 surrounding the vehicle 51, the person 52, and the person 53 are superimposed on the side image of Fig. 14, the character "right" is superimposed at the top of the right side image on the upper side and the character "left" is superimposed at the top of the left side image on the lower side.

Furthermore, Fig. 17 is a schematic view showing an example of a monitor image in which the moving body highlighting process similar to the monitor image of Fig. 13 is performed on the side image of Fig. 14. In other words, Fig. 17 shows a monitor image in which a frame 321, a frame 322, and a frame 323 surrounding the vehicle 51, the person 52, and the person 53 are superimposed on the converted image where an image having only the horizontal direction of the right side image on the upper side of the side image of Fig. 14 reduced to 1/2 times is arranged on the right and an image having only the horizontal direction of the left side image on the lower side reduced to 1/2 times is arranged on the left, the character "right" is superimposed at the top of the right side image on the right side and the character "left" is superimposed at the top of the left side image on the left side.

In each monitor image of Figs. 15, 16, and 17, the displaying range becomes about 1/2 in both the up and down direction and in the left and right direction, and the size of the subject becomes about two times in both the up and down direction and the left and right direction compared to the corresponding monitor images of Figs. 11, 12, and 13. Therefore, the viewing angle of the left and right sides of the own vehicle can be checked in more detail.

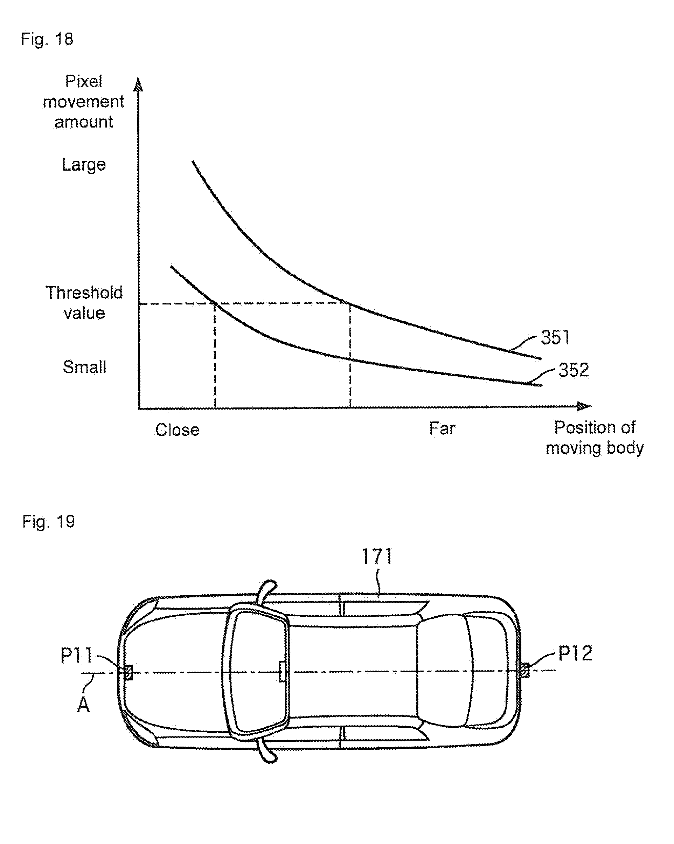

With reference to the same algorithm with reference to Fig. 18, a performance in a case where the moving body is detected based on the side image imaged by the conventional camera 2 (hereinafter referred to as conventional side image) will be compared with a performance in a case where the moving body detection process is performed based on the side image imaged using the telescopic lens for the lens 152 of the camera 111 (hereinafter referred to as telescopic side image).

Fig. 18 shows a relationship between the position of the moving body (distance from own vehicle) that moves at a constant speed in a direction (width direction of own vehicle) substantially perpendicular to an advancing direction of the own vehicle at the right side or the left side of the own vehicle, and a pixel movement amount (number of moved pixels) in the side image. The horizontal axis of Fig. 18 shows the position of the moving body, and the vertical axis shows the pixel movement amount. A curve 351 shows the relationship between the position of the moving body and the pixel movement amount in the telescopic side image, and a curve 352 shows the relationship between the position of the moving body and the pixel movement amount in the conventional side image.

As described above, the telescopic side image has substantially the same imaging range in the left and right direction but the resolution in the left and right direction is about two times compared to the conventional side image. Therefore, as shown with a dotted line of Fig. 18, if the threshold value of the pixel movement amount used in the detection of the moving body is the same, the same moving body can be detected at a position farther from the own vehicle by using the telescopic side image than by using the conventional side image. Therefore, the presence of the moving body at the left and the right sides of the own vehicle can be notified more rapidly, thereby enhancing safety.

In the telescopic side image, the imaging range in the up and down direction becomes about 1/2 compared to the conventional side image, but problems do not arise from a practical standpoint since the target to be checked is mainly limited only to those on the road (e.g., vehicle and passer) when checking the situation on the left and right sides of the own vehicle, and there is not much need in checking the situation on the upper side.

The installing position of the camera 111 is not limited to the position shown in Fig. 6 as long as the left and right sides of the own vehicle can be imaged. However, the camera 111 is desirably installed on a front side of the vehicle as much as possible, and for example, the camera 111 may be installed at a distal end P11 of a bonnet on the center axis A of the vehicle 171, as shown in Fig. 19.

For instance, the images of the right side and the left side of the rear side of the vehicle 171 can be imaged by installing the camera 111 on the center axis A of the vehicle 171 at the position P12 of a rear end so as to project out from the rear end of the vehicle 171.

In the above description, an example where the prism 151R and the prism 151L of the optical system 141 of the camera 111 are individually arranged has been described, but the prism 151R and the prism 151L may be formed as an integrated molded article. Other than the prism, various types of mirrors may be used to refract the incident light. Furthermore, a plurality of prisms and mirrors may be combined.

In the above description, an example where the image of the right side of the own vehicle is arranged on the top and the image of the left side is arranged on the bottom in the side image has been described, but the top and bottom arrangement may be reversed.

The series of processes of the side monitoring section 201 may be executed by hardware or may be executed by software. When executing the series of processes by software, the program configuring such software is installed from a program recording medium to a computer incorporated in a dedicated hardware, or a general personal computer capable of executing various functions by installing various programs.

The program to be executed by the computer may be a program in which the processes are performed in times series in the order described in the present specification, or may be a program in which the processes are performed in parallel or at the necessary timing such as when call-out is made.

In the present specification, the terms of the system refer to the general device configured by a plurality of devices, means, and the like.

The embodiment of the present invention is not limited to the embodiments described above, and various modifications may be made within a scope not deviating from the concept of the present invention.
What is claimed is: (for EP)

## Claims

1. An imaging device comprising an optical system (141) for forming one image by refracting light entered from a right side of a vehicle and light entered from a left side of the vehicle to the same direction such that one is on top and the other is on bottom while being installed at a predetermined position of the vehicle.

2. The imaging device according to claim 1, **characterized in that** the optical system (141) includes a refracting means with a first refracting portion for refracting the light entered from the right side of the vehicle to a predetermined direction and a second refracting portion for refracting the light entered from the left side of the vehicle to the predetermined direction, the first refracting portion and the second refracting portion being arranged lined in an up and down direction such that one is on top and the other is on bottom.

3. The imaging device according to claim 2, **characterized in that** the optical system (141) further includes a telescopic lens (152) which the light refracted by the refracting means enter.

4. An imaging method of an imaging device, the method comprising the step of forming one image on an imaging element (153), which is installed to be substantially perpendicular to a road surface and such that an imaging surface faces a front direction of the vehicle, by refracting light entered from a right side of a vehicle and light entered from a left side of the vehicle to the same direction such that one is on top and the other is on bottom, and imaging the formed image.

5. An image processing device (112) comprising:
an imaging means (111) including an optical system (141) forming one image by refracting light entered from a right side of a vehicle and light entered from a left side of the vehicle to the same direction such the one is on top and the other is on bottom while being installed at a predetermined position of the vehicle; and
an image processing means for processing the image of the image imaged by the imaging means (111).

6. The image processing device (112) according to claim 5, **characterized in that** the image processing means converts a right side image of the vehicle and a left side image of the vehicle lined one above the other in the image so as to line the right side image on the right and the left side image on the left.

7. The image processing device (112) according to claim 5, **characterized in that** the image processing means detects an object on the right side and the left side of the vehicle based on the image.

8. An image processing method of an image processing device (112), the method comprising the steps of:
forming one image on an imaging element (153), which is installed to be substantially perpendicular to a road surface and such that an imaging surface faces a front direction of the vehicle, by refracting light entered from a right side of a vehicle and light entered from a left side of the vehicle to the same direction such that one is on top and the other is on bottom, and imaging the formed image; and
processing the image imaged in the process of the imaging step.
